(19) Europäisches Patentamt
European Patent Office
Office européen des brevets

(11) **EP 4 366 068 A1**

(12) **EUROPEAN PATENT APPLICATION**
published in accordance with Art. 153(4) EPC

(43) Date of publication:
**08.05.2024 Bulletin 2024/19**

(21) Application number: **22846239.6**

(22) Date of filing: **20.07.2022**

(51) International Patent Classification (IPC):
**H01M 50/451** (2021.01)    **H01M 50/489** (2021.01)
**H01G 11/52** (2013.01)    **H01M 50/46** (2021.01)

(52) Cooperative Patent Classification (CPC):
**H01G 11/52; H01M 50/451; H01M 50/46;
H01M 50/489;** Y02E 60/10

(86) International application number:
**PCT/KR2022/010656**

(87) International publication number:
**WO 2023/003369 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 20.07.2021   KR 20210095122
20.07.2021   KR 20210095123
20.07.2021   KR 20210095124

(71) Applicant: **LG Chem, Ltd.**
**Yeongdeungpo-gu**
**Seoul 07336 (KR)**

(72) Inventors:
• KIM, Bong-Tae
  Daejeon 34122 (KR)
• LEE, Joo-Sung
  Daejeon 34122 (KR)
• MUN, Sung Cik
  Daejeon 34122 (KR)
• LEE, A-Young
  Daejeon 34122 (KR)
• JUNG, Kil-An
  Daejeon 34122 (KR)
• HAN, Sung-Jae
  Daejeon 34122 (KR)

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL DEVICE AND ELECTROCHEMICAL DEVICE COMPRISING SAME**

(57)    The present disclosure relates to a separator for an electrochemical device comprising an inorganics-containing porous layer on at least one surface of a porous polymer support, and comprising inorganic fillers and a binder polymer, wherein the binder polymer comprises a first binder polymer, and the first binder polymer is poly(vinylidene fluoride-co-hexafluoropropylene) having a tan $\delta$ peak at -18°C to -5°C when measured by Dynamic Mechanical Analysis, and an electrochemical device comprising the same. The separator for an electrochemical device according to an embodiment of the present disclosure has improved adhesion property with electrode and safety at high temperature.

FIG. 1

**Description**

TECHNICAL FIELD

An embodiment of the present disclosure relates to a separator for an electrochemical device and an electrochemical device comprising the same.

The present application claims priority to Korean Patent Application Nos. 2021-0095122, 2021-0095123 and 2021-0095124 filed in the Republic of Korea on July 20, 2021, the disclosures of which are incorporated herein by reference.

BACKGROUND ART

Recently, there has been an increasing attention to energy storage technology day by day. As the application field of energy storage technology has been extended to mobile phones, camcorders, laptop computers, and even electric cars, there is growing demand for high energy density of batteries used as a power source of electronic devices. A lithium secondary battery is the best electrochemical device that meets the demand, and many studies are being made on lithium secondary batteries.

In the fabrication and use of lithium secondary batteries, ensuring safety of lithium secondary batteries is a challenge. In particular, separators commonly used in lithium secondary batteries exhibit severe thermal shrinkage behaviors in high temperature situations due to their material characteristics and procedural characteristics, causing a safety problem such as an internal short circuit.

To solve this safety problem, a separator comprising a porous polymer support coated with a mixture of inorganic fillers and a binder polymer has been suggested. However, in this instance, since the melting temperature Tm value of the binder polymer used is about 120°C, the separator still shows thermal shrinkage behaviors at high temperature of, for example, 150°C. Additionally, when the separator and electrodes are stacked to form an electrode assembly, the electrodes and the separator are separated from each other due to insufficient interlayer adhesion, and in turn the separated inorganic fillers may act as local defects in the electrochemical device.

DISCLOSURE

Technical Problem

The present disclosure is directed to providing a separator for an electrochemical device with improved adhesion property with electrode and safety at high temperature and an electrochemical device comprising the same.

Technical Solution

To solve the above-described problem, according to an aspect of the present disclosure, there is provided a separator for an electrochemical device of the following embodiments.

A first embodiment relates to the separator for an electrochemical device comprising a porous polymer support; and an inorganics-containing porous layer on at least one surface of the porous polymer support, and comprising inorganic fillers and a binder polymer, wherein the binder polymer comprises a first binder polymer, and the first binder polymer is poly(vinylidene fluoride-co-hexafluoropropylene) having a tan $\delta$ peak at -18°C to -5°C when measured by Dynamic Mechanical Analysis.

According to a second embodiment, in the first embodiment, an amount of hexafluoropropylene repeating units in the first binder polymer may be 4 weight% to 22 weight% based on 100 weight% of a sum of an amount of vinylidene fluoride repeating units and the amount of hexafluoropropylene repeating units.

According to a third embodiment, in the first or second embodiment, the binder polymer may further comprise a second binder polymer, and the second binder polymer may be poly(vinylidene fluoride-co-chlorotrifluoroethylene) having a tan $\delta$ peak at -11°C to 0°C when measured by the Dynamic Mechanical Analysis.

According to a fourth embodiment, in the third embodiment, the second binder polymer may have a melting temperature of 155°C or more.

According to a fifth embodiment, in the third or fourth embodiment, an amount of chlorotrifluoroethylene repeating units in the second binder polymer may be 10 weight% to 30 weight% based on 100 weight% of a sum of an amount of vinylidene fluoride repeating units and the amount of chlorotrifluoroethylene repeating units.

According to a sixth embodiment, in any one of the third to fifth embodiments, a weight ratio between the first binder polymer and the second binder polymer may be 50:50 to 95:5.

According to a seventh embodiment, in any one of the first to sixth embodiments, a thickness of the inorganics-containing porous layer may be 10 $\mu$m or less.

According to an eighth embodiment, in any one of the first to seventh embodiments, thermal shrinkage in each of Machine Direction (MD) and Transverse Direction (TD) after leaving the separator for an electrochemical device untouched at 130°C for 1 hour may be 25% or less.

According to a ninth embodiment, in any one of the first to eighth embodiments, thermal shrinkage in each of Machine Direction (MD) and Transverse Direction (TD) after leaving the separator for an electrochemical device untouched at 150°C for 30 minutes may be 55% or less.

According to a tenth embodiment, in any one of the first to ninth embodiments, the separator for an electrochemical device may have an electrode adhesion property of 40 gf/25 mm or more.

According to an eleventh embodiment, in any one of the first to tenth embodiments, the first binder polymer may be poly(vinylidene fluoride-co-hexafluoropropylene) having a $\gamma$-crystal form.

According to a twelfth embodiment, in any one of the first to eleventh embodiments, the first binder polymer may have a melting temperature of 155°C or more.

To solve the above-described problem, according to an aspect of the present disclosure, there is provided an electrochemical device of the following embodiment.

A thirteenth embodiment relates to the electrochemical device comprising a positive electrode and a negative electrode, and a separator for an electrochemical device interposed between the positive electrode and the negative electrode, wherein the separator for an electrochemical device is defined in any one of the first to twelfth embodiments.

Advantageous Effects

The separator for an electrochemical device according to an embodiment of the present disclosure comprises poly(vinylidene fluoride-co-hexafluoropropylene) having the tan $\delta$ peak at -18°C to -5°C when measured by Dynamic Mechanical Analysis, thereby improving the adhesion property with electrode and reducing thermal shrinkage at high temperature.

The separator for an electrochemical device according to an embodiment of the present disclosure comprises poly(vinylidene fluoride-co-hexafluoropropylene) having the tan $\delta$ peak at -18°C to -5°C when measured by Dynamic Mechanical Analysis and poly(vinylidene fluoride-co-chlorotrifluoroethylene) having the tan $\delta$ peak at -11°C to 0°C when measured by Dynamic Mechanical Analysis, thereby improving the adhesion property with electrode and reducing thermal shrinkage at high temperature.

The separator for an electrochemical device according to an embodiment of the present disclosure comprises the first binder polymer for the adhesion property with electrode and the second binder polymer for the adhesion property between the porous polymer support and the inorganics-containing porous layer, thereby improving the adhesion property with electrode.

DESCRIPTION OF DRAWINGS

The accompanying drawings illustrate an embodiment of the present disclosure and together with the foregoing disclosure, serve to provide further understanding of the technical features of the present disclosure. However, the present disclosure is not to be construed as being limited to the drawings.

FIG. 1 is a graph showing a relationship between the temperature of a first binder polymer used in examples 1 to 3 and comparative example 1 and tan $\delta$ measured by Dynamic Mechanical Analysis (DMA).
FIG. 2 is a diagram showing a relationship between the temperature of a second binder polymer used in Example 1 and tan $\delta$ measured by Dynamic Mechanical Analysis (DMA).
FIG. 3 is a diagram showing a crystal form of a first binder polymer used in example 1 measured by Wide angle X-ray diffraction (WAXS).
FIG. 4 is a diagram showing a crystal form of a first binder polymer used in example 2 measured by Wide angle X-ray diffraction (WAXS).
FIG. 5 is a diagram showing a crystal form of a first binder polymer used in example 3 measured by Wide angle X-ray diffraction (WAXS).
FIG. 6 is a diagram showing a crystal form of a first binder polymer used in comparative example 1 measured by Wide angle X-ray diffraction (WAXS).

BEST MODE

Hereinafter, an exemplary embodiment of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the disclosure in the embodiments of the present disclosure is just an exemplary embodiment of the present disclosure, but not intended to fully describe the technical aspects of the present disclosure, so it should be understood that a variety of other equivalents and modifications could have been made thereto at the time that the application was filed.

The terms such as "first", "second" and the like, are used to distinguish one element from another, and each element is not limited by the terms.

A separator for an electrochemical device according to an aspect of the present disclosure comprises:

> a porous polymer support; and
> an inorganics-containing porous layer on at least one surface of the porous polymer support, and comprising inorganic fillers and a binder polymer,
> wherein the binder polymer comprises a first binder polymer, and
> the first binder polymer is poly(vinylidene fluoride-co-hexafluoropropylene) having the tan δ peak at -18°C to -5°C when measured by Dynamic Mechanical Analysis.

The separator for an electrochemical device according to an embodiment of the present disclosure comprises the porous polymer support.

In general, the porous polymer support may include any type of material of separators for electrochemical devices without limitation. The porous polymer support is a thin film containing a polymer material, and non-limiting examples of the polymer material include olefin polymer, ethylene terephthalate polymer, butylene terephthalate polymer, acetal polymer, amide polymer, carbonate polymer, imide polymer, etheretherketone polymer, ethersulfone polymer, phenylene oxide polymer, phenylene sulfide polymer, ethylene naphthalene polymer. Additionally, the porous polymer support may include a non-woven fabric or a porous polymer film made of the above-described polymer material or a stack of two or more of them. Specifically, the porous polymer support may be any one of the following a) to e):

> a) a porous film formed by melting and extruding the polymer material,
> b) a multilayer film formed by stacking a) the porous film in two or more layers,
> c) a non-woven web made of filaments obtained by melting/spinning the polymer material,
> d) a multilayer film formed by stacking c) the non-woven web in two or more layers,
> e) a porous film of multilayer structure comprising at least two of the a) to d).

To ensure high air permeability and porosity from the above-described material, the porous polymer support may be manufactured by forming pores through the common method known in the technical field, for example, a wet method using a solvent, a diluent or a pore forming agent or a dry method using stretching.

In an embodiment of the present disclosure, there is no limit on the thickness of the porous polymer support, but the porous polymer support may be 1 $\mu$m to 100 $\mu$m, or 1 $\mu$m to 30 $\mu$m in thickness. When the thickness of the porous polymer support is in the above-described range, it is possible to prevent damage of the separator during the use of the battery and ensure the energy density.

In the specification, the thickness of the porous polymer support may be measured using, for example, a thickness measurement instrument (Mitutoyo, VL-50S-B).

In this instance, there is no limit on the average pore size and porosity of the porous polymer support, and the porous polymer support may have the optimum average pore size and porosity for electrochemical device applications. The average pore size may be 0.01 $\mu$m to 50 $\mu$m or 0.1 $\mu$m to 20 $\mu$m, and the porosity may be 5% to 95%. When the pore size and the porosity is in the above-described range, it may be easy to prevent the porous polymer support from acting as resistance and maintain the mechanical properties of the porous polymer support.

The average pore size and the porosity of the porous polymer support may be measured by 6-point BET method according to a nitrogen gas adsorption-flow method using scanning electron microscope (SEM) image, Mercury porosimeter, capillary flow porometer or porosimetry analyzer (Bell Japan Inc, Belsorp-II mini).

Alternatively, the porosity of the porous polymer support may be measured by calculating the net density of the porous support from the density (apparent density) of the porous support, the composition ratio of the materials included in the porous support and the density of each component and calculating the porosity of the porous support from a difference between the apparent density and the net density. For example, the porosity may be calculated by the following equation.

[Equation 1]

$$\text{Porosity (volume\%)} = \{1-(\text{apparent density/net density})\} \times 100$$

In the above equation 1, the apparent density may be calculated from the following equation 2.

Apparent density (g/cm$^3$) = (weight (g) of porous support)/{(thickness (cm) of porous support)×(area (cm$^2$) of porous support)}

[Equation 2]

The separator for an electrochemical device according to an embodiment of the present disclosure comprises the inorganics-containing porous layer on at least one surface of the porous polymer support. The inorganics-containing porous layer may be on one or two surfaces of the porous polymer support.

The inorganics-containing porous layer may comprise the inorganic fillers and the binder polymer to bind the inorganic fillers to keep them together (i.e., the binder polymer connects and holds the inorganic fillers together), and the inorganic fillers and the porous polymer support may be held together by the binder polymer.

The inorganic fillers may include, without limitation, any type of inorganic filler that is electrochemically stable. That is, the inorganic fillers that may be used in the present disclosure may include, without limitation, any type of inorganic filler that does not cause oxidation and/or reduction reactions in the operating voltage range (for example, 0 to 5V vs Li/Li+) of the electrochemical device applied. In particular, the use of high dielectric constant inorganic fillers may contribute to the increased degree of dissociation of an electrolyte salt in a liquid electrolyte, for example, a lithium salt, thereby improving the ionic conductivity of the electrolyte solution.

By the above-described reasons, in an embodiment of the present disclosure, the inorganic fillers may include high dielectric constant inorganic fillers having the dielectric constant of 5 or more, and preferably 10 or more. Non-limiting examples of the inorganic fillers having the dielectric constant of 5 or more may include at least one of $BaTiO_3$, $Pb(Zr,Ti)O_3$ (PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, AlOOH, $Al(OH)_3$, SiC or $TiO_2$.

Additionally, in another embodiment of the present disclosure, the inorganic fillers may include inorganic fillers capable of transporting a lithium ion, that is, inorganic fillers that contain lithium but do not store lithium and have a function of moving a lithium ion. Non-limiting examples of the inorganic fillers capable of transporting a lithium ion may include at least one of lithium phosphate ($Li_3PO_4$), lithium titanium phosphate ($Li_xTi_y(PO_4)_3$, 0<x<2, 0<y<3), lithium aluminum titanium phosphate ($Li_xAl_yTi_z(PO_4)_3$, 0<x<2, 0<y<1, 0<z<3), $(LiAlTiP)_xO_y$ based glass (0<x<4, 0<y<13) such as $14Li_2O$-$9Al_2O_3$-$38TiO_2$-$39P_2O_5$, lithium lanthanum titanate ($Li_xLa_yTiO_3$, 0<x<2, 0<y<3), lithium germanium thiophosphate ($Li_xGe_yP_zS_w$, 0<x<4, 0<y<1, 0<z<1, 0<w<5) such as $Li_{3.25}Ge_{0.25}P_{0.75}S_4$, lithium nitride ($Li_xN_y$, 0<x<4, 0<y<2) such as $Li_3N$, $SiS_2$ based glass ($Li_xSi_yS_z$, 0<x<3, 0<y<2, 0<z<4) such as $Li_3PO_4$-$Li_2S$-$SiS_2$, or $P_2S_5$ based glass ($Li_xP_yS_z$, 0<x<3, 0<y<3, 0<z<7) such as $LiI$-$Li_2S$-$P_2S_5$.

In an embodiment of the present disclosure, the average particle size of the inorganic fillers may be 0.01 $\mu$m to 1.5 $\mu$m. When the average particle size of the inorganic fillers satisfies the above-described range, it may be easy to form the inorganics-containing porous layer having uniform thickness and optimal porosity, and it is possible to provide good dispersion of the inorganic fillers and desired energy density.

In this instance, the average particle size of the inorganic fillers as used herein refers to D50 particle size, and "D50 particle size" refers to the particle size at 50% in the cumulative particle size distribution. The particle size may be measured using a laser diffraction method. Specifically, after powder to be measured is dispersed in a dispersing medium and introduced into commercially available laser diffraction particle size measurement equipment (for example, Microtrac S3500), the particle size distribution is calculated by measuring a diffraction pattern difference according to the particle size when particles pass through a laser beam. D50 particle size may be measured by calculating the particle diameter at 50% in the cumulative particle size distribution in the measurement device.

In general, in the case of poly(vinylidene fluoride-co-hexafluoropropylene), as the amount of hexafluoropropylene repeating units increases, the adhesion property increases, but the heat resistance decreases.

The inventors found that when poly(vinylidene fluoride-co-hexafluoropropylene) has the tan $\delta$ peak in a specific temperature range, both the adhesion property and the heat resistance may be improved irrespective of the amount of hexafluoropropylene repeating units, and based on the finding, they completed the present disclosure.

In the specification, for example, the amount of poly(vinylidene fluoride-co-hexafluoropropylene) repeating units may be measured by measuring the amount of hexafluoropropylene (HFP) functional groups in the inorganics-containing porous layer. For example, the amount of poly(vinylidene fluoride-co-hexafluoropropylene) repeating units may be measured by determining the HFP content in the inorganics-containing porous layer through Fluorine atomic Nuclear Magnetic Resonance (NMR) Spectroscopy.

In an embodiment of the present disclosure, for example, the measurement may be made by Fluorine atomic NMR Spectroscopic analysis using 19F NMR (Bruker DRX-300) analyzer and a reference material $CFCl_3$ as follows. For example, first, a target sample is dissolved in deuterated acetone at the concentration of 8 wt%. The weight average molecular weight is determined through gel permeation chromatography (GPC, high temperature PL 220, Waters) equipped with a refractive index detector and two PLgel-10 $\mu$m Mixed-B columns (Polymer Laboratory). For a mobile phase solvent, dimethyl formamide with 0.1 M LiBr is used, and the measurement condition includes 80°C and the flow rate of 1.0 mL/min. The standard sample may be, for example, polystyrene having the average molecular weight ranging from 2,000 g/mol to 2,000,000 g/mol.

In another embodiment of the present disclosure, for example, the Fluorine atomic NMR Spectroscopic analysis may be conducted using Unity 400 spectrometer at 376.3 MHz. For example, spectrum may be obtained by an excitation pulse width of 8.0 microseconds in 50°C deuterated dimethyl formamide and a recirculating delay of 10 seconds, or an excitation pulse width of 6.0 microseconds in 50°C deuterated dimethyl sulfoxide and a recirculating delay of 5 seconds, or an excitation pulse width of 8.0 microseconds in 50°C deuterated acetone and a recirculating delay of 20 seconds.

The binder polymer comprises the first binder polymer, for example, poly(vinylidene fluoride-co-hexafluoropropylene) having the tan $\delta$ peak at -18°C to -5°C when measured by Dynamic Mechanical Analysis.

In the specification, the tan $\delta$ refers to a ratio of loss modulus E" to storage modulus E', and the size of the tan $\delta$ peak refers to the quantity of amorphous regions in the sample.

The "tan $\delta$ peak" refers to an inflection point at which the slope of a tangent line changes from positive (+) to negative (-) to a graph showing a relationship between temperature on the x-axis and tan $\delta$ on the y-axis. Alternatively, the "tan $\delta$ peak" refers to a point at which the slope of a tangent line to the graph is 0. In this instance, the tan $\delta$ peak may refer to the second peak among many tan $\delta$ peaks.

Since the first binder polymer has the tan $\delta$ peak in the above-described temperature range, the adhesion property and the heat resistance at high temperature are good. For example, the heat resistance may be good irrespective of the amount of hexafluoropropylene repeating units. Even though the amount of hexafluoropropylene repeating units increases, the heat resistance may be good.

Accordingly, the separator for an electrochemical device according to an embodiment of the present disclosure comprising the first binder polymer may have the improved safety at high temperature. For example, after the separator is left untouched at 130°C for 1 hour, the thermal shrinkage of the separator in each of Machine Direction (MD) and Transverse Direction (TD) may be 25% or less, or 20% or less, or 15% or less, or 10% or less, or 5% or less.

Additionally, after the separator is left untouched at 150°C for 30 minutes, the thermal shrinkage of the separator in each of Machine Direction (MD) and Transverse Direction (TD) may be 55% or less, or 50% or less, or 45% or less, or 40% or less, or 35% or less, or 30% or less, or 25% or less, or 20% or less, or 15% or less, or 10% or less, or 5% or less.

Here, the Machine Direction' refers to a direction of travel when the separator is continuously produced or a lengthwise direction in which the length of the separator is long in a winding direction of the manufactured separator, and the 'Transverse Direction' refers to a cross direction of the machine direction, i.e., a direction that is perpendicular to the direction of travel when the separator is continuously produced or a direction that is perpendicular to the lengthwise direction in which the length of the separator is long in the winding direction of the manufactured separator.

In case that the first binder polymer does not have the tan $\delta$ peak in the above-described temperature range, for example, in case that the first binder polymer has the tan $\delta$ peak at 17°C to 28°C, as the amount of hexafluoropropylene repeating units increases, the adhesion property increases, but the heat resistance reduces.

In an embodiment of the present disclosure, the first binder polymer may have the tan $\delta$ peak at -15°C or more, or -13°C or more, or -12.12°C or more, or -12°C or more, or - 10°C or more, or -9.68°C or more, or -9°C or more, or -8.74°C and -6°C or less, or -7°C or less, or -8°C or less, or -8.74°C or less, or -9°C or less, or -9.68°C or less, or -12°C or less, or -12.12°C or less when measured by Dynamic Mechanical Analysis.

The Dynamic Mechanical Analysis is an analysis method for measuring elastic modulus (modulus) and energy loss (damping) as a function of temperature or frequency by applying a vibrating force or deformation to the polymer sample.

In an embodiment of the present disclosure, after the pressure is applied to the first binder polymer at 190°C to make the binder sample having the thickness of 0.5 mm, which in turn is maintained at -80°C for 10 minutes, the tan $\delta$ value may be measured by measuring a ratio between storage modulus E' and loss modulus E" using Dynamic Mechanical Analysis while increasing the temperature to 140°C at the rate of 5°C/min.

In an embodiment of the present disclosure, the measurement may be made by the Dynamic Mechanical Analysis using TA Instruments DMA Q800.

In an embodiment of the present disclosure, the melting temperature of the first binder polymer may be 155°C or more, or 160°C or more, or 165°C or more, or 165.36°C or more, or 166°C or more, or 166.31°C or more, or 166.37°C or more. Additionally, the melting temperature of the first binder polymer may be 200°C or less, 190°C or less, or 180°C or less, or 170°C or less, or 166.37°C or less, or 166.31°C or less, or 166°C or less, or 165.36°C or less. The first binder polymer may have the tan $\delta$ peak at -18°C to -5°C when measured by Dynamic Mechanical Analysis and may have the above-described range of melting temperatures. When the melting temperature of the first binder polymer satisfies the above-described range, the separator for an electrochemical device according to an embodiment of the present disclosure comprising the first binder polymer may have the improved heat resistance at high temperature. For example, the separator may have the reduced thermal shrinkage at high temperature.

In the specification, the melting temperature of the binder polymer may be measured using Differential scanning calorimeter (DSC). The Differential scanning calorimeter is a thermoanalytical technique to measure a difference in the amount of heat required to increase the temperature of the sample and the reference material as a function of temperature.

In an embodiment of the present disclosure, the melting temperature of the binder polymer may be calculated from the temperature of the differential scanning calorimetry curve peak in the range of 155°C to 180°C when heating the binder polymer from 25°C to 200°C at the rate of 10°C/min, leaving it untouched at 200°C for 10 minutes, cooling it down to 25°C at 10°C/min, leaving it untouched at 25°C for 10 minutes, and heating it again to 200°C at 10°C/min.

In an embodiment of the present disclosure, the amount of hexafluoropropylene repeating units in the first binder polymer may be 4 weight% or more, 7 weight% or more, or 9 weight% or more, or 10 weight% or more, or 11 weight% or more, or 13 weight% or more, or 15 weight% or more, or 17 weight% or more, or 18 weight% or more, or 18.1 weight% or more, or 18.5 weight% or more, and 22 weight% or less, or 20 weight% or less, or 19 weight% or less, or 18.5 weight% or less, or 18.1 weight% or less, or 18 weight% or less, or 17 weight% or less, or 15 weight%, or less, or 13 weight% or less, or 11 weight% or less, or 10 weight% or less based on 100 weight% of the sum of the amount of vinylidene fluoride repeating units and the amount of hexafluoropropylene repeating units. When the first binder polymer comprises the hexafluoropropylene repeating units in the above-described amount, it is possible to improve the adhesion property with electrode.

In an embodiment of the present disclosure, the first binder polymer may have $\gamma$-crystal form.

In the specification, the $\gamma$-crystal form refers to a crystal form having a trans-trans-trans-gauche structure. When the first binder polymer has the $\gamma$-crystal form, the first binder polymer may have the improved heat resistance due to having the trans-trans-trans-gauche structure. That is, the first binder polymer may have the tan $\delta$ peak at -18°C to -5°C when measured by Dynamic Mechanical Analysis and may have the $\gamma$-crystal form.

Wide angle X-ray diffraction (WAXS) may be used to determine whether the first binder polymer has the $\gamma$-crystal form. When the first binder polymer has the $\gamma$-crystal form, when measured by Wide angle X-ray diffraction (WAXS), for example, wider diffraction peak than $\alpha$-crystal form or $\beta$-crystal form is observed near $2\theta$ position of about 20.73°, and shoulder peak is found near $2\theta$ position of about 20.73°. Additionally, a relative ratio of diffraction peak at $2\theta$ position of 17.7°, 18.44°, 20.04°, 20.73°, 26.72°, 27.70° is 46, 62, 100, 52, 15, 8, respectively. Here, the relative ratio of diffraction peak indicates the degree of crystallization of the first binder polymer.

In an embodiment of the present disclosure, in addition to the first binder polymer, the binder polymer may further comprise a second binder polymer.

The second binder polymer may be poly(vinylidene fluoride-co-chlorotrifluoroethylene) having the tan $\delta$ peak at -11°C or more, or -9°C or more, or -7°C or more, or -6.26°C or more and 0°C or less, or -2°C or less, or -4°C or less, or -6°C or less, or -6.26°C or less when measured by Dynamic Mechanical Analysis. In this instance, the tan $\delta$ peak may be the second peak among many tan $\delta$ peaks. When the second binder polymer has the tan $\delta$ peak in the above-described temperature range, it is possible to improve the heat resistance at high temperature.

Accordingly, when the first binder polymer and the second binder polymer are included together, the separator for an electrochemical device according to an embodiment of the present disclosure may have the improved safety at high temperature.

Additionally, in an embodiment of the present disclosure, when the first binder polymer and the second binder polymer are included together, the first binder polymer moves to the separator-electrode interface, thereby ensuring the electrode adhesion property of the separator for an electrochemical device, and the second binder polymer may play a role in ensuring the adhesion property between the porous polymer support and the inorganics-containing porous layer.

Due to different phase separation rates of poly(vinylidene fluoride-co-hexafluoropropylene and poly(vinylidene fluoride-co-chlorotrifluoroethylene), the first binder polymer moves to the separator-electrode interface, thereby ensuring the electrode adhesion property of the separator for an electrochemical device, and the second binder polymer may play a role in ensuring the adhesion property between the porous polymer support and the inorganics-containing porous layer.

In the process of applying the separator comprising the binder polymer in the inorganics-containing porous layer to the battery, the binder polymer included in the inorganics-containing porous layer may be released by the electrolyte solution, causing loss of the binder polymer. In particular, the release of the binder polymer by the electrolyte solution gets worse when the temperature in the battery rises, and in general, after the battery is fabricated, aging occurs in the temperature condition of 60°C or more, and during the aging, the binder polymer in the inorganics-containing porous layer is released by the electrolyte solution, causing a reduction in the binding strength of the inorganics-containing porous layer, and the inorganics-containing porous layer may be peeled off from the porous polymer support or the inorganic fillers in the inorganics-containing porous layer may be separated off.

Since the separator for an electrochemical device according to an embodiment of the present disclosure comprises the second binder polymer, it is possible to reduce the release of the binder polymer. Accordingly, it may be easy to prevent the separation of the inorganic fillers.

In an embodiment of the present disclosure, the melting temperature of the second binder polymer may be 155°C or more, or 160°C or more, or 165°C or more, or 166°C or more, or 166.6°C or more. Additionally, the melting temperature of the second binder polymer may be 200°C or less, 190°C or less, or 180°C or less, or 170°C or less, or 166.6°C or less. The second binder polymer may have the tan $\delta$ peak at -11°C to 0°C when measured by Dynamic Mechanical Analysis and the above-described range of melting temperatures. When the melting temperature of the second binder polymer satisfies the above-described range, the separator for an electrochemical device according to an embodiment of the present disclosure comprising the second binder polymer may have the improved heat resistance at high temperature. For example, the separator for an electrochemical device may have the reduced thermal shrinkage at high temperature.

In an embodiment of the present disclosure, the amount of chlorotrifluoroethylene repeating units in the second binder polymer may be 10 weight% or more, or 15 weight% or more, or 17 weight% or more, or 20 weight% or more, and 30 weight% or less, or 25 weight% or less, or 22 weight% or less, or 20 weight% or less based on 100 weight% of the sum of the amount of vinylidene fluoride repeating units and the amount of chlorotrifluoroethylene repeating units. The second binder polymer may comprise poly(vinlylidene fluoride-co-chlorotrifluoroethylene) having the tan $\delta$ peak at -11°C to 0°C when measured by Dynamic Mechanical Analysis and the above-described amount of chlorotrifluoroethylene repeating units. When the second binder polymer includes the above-described amount of repeating units, it is possible to improve the adhesion property with electrode.

In an embodiment of the present disclosure, a weight ratio between the first binder polymer and the second binder polymer may be 50:50 to 95:5, or 86:14 to 80:20, or 84:16 to 80:20, or 82:18 to 80:20. When the weight ratio between the first binder polymer and the second binder polymer satisfies the above-described range, it may be easy to ensure the adhesion property with electrode and suppress the release of the binder at high temperature when immersed in the electrolyte solution. Additionally, it is possible to reduce the microvoids.

In an embodiment of the present disclosure, the weight ratio between the inorganic fillers and the binder polymer may be determined considering the thickness, the pore size and the porosity of the inorganics-containing porous layer, and may be 50:50 to 99.9:0.1, or 50:50 to 80:20, or to 80:20 to 99.9:0.1, or 95:5 to 99.9:0.1. When the weight ratio between the inorganic fillers and the binder polymer is in the above-described range, it is possible to ensure sufficient empty spaces between the inorganic fillers, making it easy to ensure the pore size and porosity of the inorganics-containing porous layer. Additionally, it may be easy to ensure the adhesion property between the inorganic fillers and between the inorganic fillers and the porous polymer support.

In an embodiment of the present disclosure, the inorganics-containing porous layer may further comprise an additive such as a dispersing agent and/or a thickening agent. In an embodiment of the present disclosure, the additive may include at least one of citric acid, Hydroxy ethyl cellulose (HEC), hydroxy propyl cellulose (HPC), ethylhydroxy ethyl cellulose (EHEC), methyl cellulose (MC), carboxymethyl cellulose (CMC), hydroxyalkyl methyl cellulose or cyanoethylene polyvinylalcohol.

In an embodiment of the present disclosure, the inorganics-containing porous layer has a structure in which the inorganic fillers are tightly compacted in contact with each other and held together by the binder polymer to form interstitial volumes between the inorganic fillers, and the interstitial volumes between the inorganic fillers become empty spaces that will be pores.

The inorganics-containing porous layer may be formed by preparing an inorganics-containing porous layer forming slurry comprising the inorganic fillers, the first binder polymer and a solvent for the first binder polymer and coating the inorganics-containing porous layer forming slurry on at least one surface of the porous polymer support and drying.

In view of further comprising the second binder polymer, the solvent for the first binder polymer may act as a solvent for the second binder polymer.

In an embodiment of the present disclosure, the solvent for the first binder polymer may include at least one of N-methyl-2-pyrrolidone, acetone, methyl ethyl ketone, diemthylformaide or dimethyl acetamide.

The inorganics-containing porous layer forming slurry may be prepared by dissolving or dispersing the first binder polymer, or the first binder polymer and the second binder polymer in the solvent for the first binder polymer, and adding and dispersing the inorganic fillers, but the method for preparing the slurry is not limited thereto.

In an embodiment of the present disclosure, the coating of the inorganics-containing porous layer forming slurry on at least one surface of the porous polymer support may be followed by phase separation using the non-solvent for the first binder polymer by the common method known in the technical field. The phase separation may be performed to form a pore structure in the inorganics-containing porous layer. The phase separation may be performed by a wet phase separation or immersion phase separation process.

Below is a description of the wet phase separation.

First, the wet phase separation may be performed under the temperature condition in the range of 15°C to 70°C or 20°C to 50°C and the relative humidity condition in the range of 15% to 80% or 30% to 50%. The inorganics-containing porous layer forming slurry may undergo phase transition by the phase separation (vapor-induced phase separation) phenomenon known in the corresponding technical field through the drying process.

For the wet phase separation, the non-solvent for the first binder polymer may be introduced in a gas state. The non-solvent for the first binder polymer may include, without limitation, any type of non-solvent that does not dissolve the first binder polymer and is partially compatible with the solvent for the first binder polymer, and may include, for example, non-solvents in which the solubility of the first binder polymer is less than 5 weight% at 25°C.

The non-solvent for the first binder polymer may be also the non-solvent for the second binder polymer, and for example, may include non-solvents that do not dissolve the second binder polymer, and in which the solubility of the second binder polymer is less than 5 weight% at 25°C.

For example, the non-solvent for the first binder polymer may be at least one of water, methanol, ethanol, isopropanol, butanol, butanediol, ethylene glycol, propylene glycol or tripropylene glycol.

Below is a description of the immersion phase separation.

The inorganics-containing porous layer forming slurry is coated on at least one surface of the porous polymer support, and immersed in a coagulant solution comprising the non-solvent for the first binder polymer for a predetermined time. Accordingly, phase separation takes place in the coated inorganics-containing porous layer slurry to solidify the first binder polymer. In this process, the inorganics-containing porous layer is formed. Subsequently, washing is performed to remove the coagulant solution, followed by drying. The drying may be performed using the known method, and may be performed by a batch or continuous process using an oven or a heater type chamber in the temperature range considering the vapor pressure of the solvent for the first binder polymer used. The drying is performed to remove most of the solvent for the first binder polymer from the slurry. In view of productivity, the shorter the better, and for example, the drying may be performed for 1 min or less or 30 sec or less.

For the coagulant solution, the non-solvent for the first binder polymer alone or a mixed solvent of the non-solvent for the first binder polymer and the solvent for the first binder polymer may be used. The mixed solvent of the non-solvent for the first binder polymer and the solvent for the first binder polymer forms a good pore structure, and from the perspective of productivity, the non-solvent for the first binder polymer may be present in an amount of 50 weight% or more based on 100 weight% of the coagulant solution.

In an embodiment of the present disclosure, the average pore size of the inorganics-containing porous layer may be 0.001 $\mu$m to 10 $\mu$m. The average pore size of the inorganics-containing porous layer may be measured by Capillary flow porometry. The Capillary flow porometry measures the diameter of the smallest pore in the thickness-wise direction. Accordingly, to measure the average pore size of the inorganics-containing porous layer by Capillary flow porometry, it is necessary to separate the inorganics-containing porous layer from the porous polymer support and cover with a nonwoven fabric to support the separated inorganics-containing porous layer, and in this instance, the pore size of the nonwoven fabric is much larger than the pore size of the inorganics-containing porous layer.

In an embodiment of the present disclosure, the porosity of the inorganics-containing porous layer may be 5% to 95%, or 10% to 95%, or 20% to 90%, or 30% to 80%. The porosity corresponds to a value obtained by subtracting the volume converted from the weight and density of each component of the inorganics-containing porous layer from the volume calculated using the thickness and the horizontal and vertical dimensions of the inorganics-containing porous layer.

The porosity of the inorganics-containing porous layer may be measured by 6-point BET method according to a nitrogen gas adsorption-flow method using SEM image, Mercury porosimeter, capillary flow porometer, or Porosimetry analyzer (Bell Japan Inc, Belsorp-II mini).

In an embodiment of the present disclosure, the thickness of the inorganics-containing porous layer may be 10 $\mu$m or less, or 8 $\mu$m or less, or 6 $\mu$m or less, or 5 $\mu$m or less, or 4 $\mu$m or less and 3 $\mu$m or more, or 4 $\mu$m or more. Here, the thickness of the inorganics-containing porous layer indicates the sum of the thicknesses of the inorganics-containing porous layer on each of the two surfaces of the porous polymer support. When the thickness of the inorganics-containing porous layer satisfies the above-described range, it is possible to improve the adhesion property with electrode and the cell strength of the battery.

Since the separator for an electrochemical device according to an embodiment of the present disclosure comprises the first binder polymer having the tan $\delta$ peak at -18°C to -8°C when measured by Dynamic Mechanical Analysis, it is possible to improve the safety at high temperature and the adhesion property with electrode.

In an embodiment of the present disclosure, after the separator for an electrochemical device is left untouched at 130°C for 1 hour, the thermal shrinkage of the separator in each of Machine Direction (MD) and Transverse Direction (TD) may be 25% or less, or 20% or less.

Additionally, after the separator is left untouched at 150°C for 30 minutes, the thermal shrinkage of the separator in each of Machine Direction (MD) and Transverse Direction (TD) may be 55% or less, or 50% or less.

In an embodiment of the present disclosure, the separator for an electrochemical device may have the electrode adhesion property of 40 gf/25 mm or more, or 50 gf/25 mm or more, or 60 gf/25 mm or more and 70 gf/25 mm or less.

In an embodiment of the present disclosure, after inserting the separator and the electrode in between 100 $\mu$m PET films and pressing at the temperature of 60°C under the pressure of 1000 kg$_f$ for 1 second using a horizontal laminator to adhere them, a force may be applied to the adhered separator in the direction of 180° at the measurement speed of 300 mm/min, and the electrode adhesion property may be measured from a force necessary to separate the separator.

For example, one separator and one electrode may be stacked facing each other and then inserted in between 100 $\mu$m PET films, and they may be adhered to each other through a 60°C horizontal laminator while heating under the pressure of 1000 kg$_f$/cm$^2$ for 1 second, the electrode and the separator adhered to each other may be attached onto glass having a double-sided tape such that the electrode surface is attached, the end of the separator may be mounted on UTM equipment (LLOYD Instrument LF Plus), a force may be applied in the direction of 180° at the measurement speed of 300 mm/min, and the electrode adhesion property of the separator may be measured from a force necessary to separate the adhered separator.

The separator for an electrochemical device may be interposed between a positive electrode and a negative electrode to manufacture an electrochemical device.

The electrochemical device of the present disclosure may include any type of device using electrochemical reaction, and specific examples may include primary and secondary batteries, fuel cells, solar cells or capacitors such as super capacitors.

In particular, the electrochemical device may be a lithium secondary battery including a lithium metal secondary battery, a lithium ion secondary battery, a lithium polymer secondary battery or a lithium ion polymer secondary battery.

The electrode to be applied with the separator for an electrochemical device of the present disclosure is not limited to a particular type, and may be manufactured by binding an electrode active material layer comprising an electrode active material, a conductive material and a binder to an electrode current collector by the common method known in the corresponding technical field.

Non-limiting examples of the positive electrode active material may include layered compounds or compounds with one or more transition metal such as lithium cobalt composite oxide (LiCoO$_2$), lithium nickel oxide (LiNiO$_2$); lithium manganese oxide such as Li$_{1+x}$Mn$_{2-x}$O$_4$ (x = 0 to 0.33), LiMnO$_3$, LiMn$_2$O$_3$, LiMnO$_2$; lithium copper oxide (Li$_2$CuO$_2$); vanadium oxide such as LiV$_3$O$_5$, LiV$_3$O$_4$, V$_2$O$_5$, C$_{U2}$V$_2$O$_7$; Ni site lithium nickel oxide represented by formula LiNi$_{1-x}$M$_x$O$_2$ (M = Co, Mn, Al, Cu, Fe, Mg, B or Ga, x = 0.01 to 0.3); lithium manganese composite oxide represented by formula LiMn$_{2-x}$M$_x$O$_2$ (M = Co, Ni, Fe, Cr, Zn or Ta, x = 0.01 to 0.1) or Li$_2$Mn$_3$MO$_5$ (M = Fe, Co, Ni, Cu or Zn); LiMn$_2$O$_4$ with partial substitution of alkali earth metal ion for Li; disulfide compounds and Fe$_2$(MoO$_4$)$_3$, but is not limited thereto.

Non-limiting examples of the negative electrode active material may include any negative electrode active material commonly used in the negative electrode of the electrochemical device, and in particular, may include lithium adsorption materials such as lithium metal or lithium alloy, carbon, petroleum coke, activated carbon, graphite or other carbons.

Non-limiting examples of the positive electrode current collector may include foils made of aluminum, nickel or a combination thereof, and non-limiting examples of the negative electrode current collector may include foils made of copper, gold, nickel or copper alloy or a combination thereof.

In an embodiment of the present disclosure, the conductive material used in the negative electrode and the positive electrode may be, in general, added in an amount of 1 weight% to 30 weight% based on the total weight of the active material layer, respectively. The conductive material may include, without limitation, any particular type of conductive material having the conductive property while not causing a chemical change to the corresponding battery, and for example, may include graphite such as natural graphite or artificial graphite; carbon black such as acetylene black, ketjen black, channel black, furnace black, lamp black and thermal black; conductive fibers such as carbon fibers or metal fibers; fluorocarbon; metal powder such as aluminum powder and nickel powder; conductive whiskers such as zinc oxide and potassium titanate; conductive metal oxide such as titanium oxide; conductive materials such as polyphenylene derivatives.

In an embodiment of the present disclosure, the binder used in the negative electrode and the positive electrode assists in binding the active material and the conductive material and binding the active material and the current collector, and in general, may be added in an amount of 1 weight% to 30 weight% based on the total weight of the active material layer, respectively. Examples of the binder may include polyvinylidene fluoride (PVdF), polyacrylic acid (PAA), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluorine rubber, and various types of copolymers.

In an embodiment of the present disclosure, the electrochemical device comprises an electrolyte solution, and the electrolyte solution may comprise an organic solvent and a lithium salt. Additionally, the electrolyte solution may comprise an organic solid electrolyte or an inorganic solid electrolyte.

For example, the organic solvent may include aprotic organic solvents such as N-methyl-2-pyrrolidinone, ethylene carbonate, propylene carbonate, butylene carbonate, dimethyl carbonate, diethyl carbonate, gamma butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

The lithium salt is an material that is apt to dissolve in the organic solvent, and may include, for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, chloro borane lithium, lower aliphatic carboxylic acid lithium, lithium tetraphenyl borate and imide.

Additionally, to improve the charging/discharging characteristics and flame retardancy, for example, pyridine, triethylphosphite, triethanolamine, cyclic ether, ethylene diamine, n-glyme, triamide hexaphosphate, nitrobenzene derivatives, sulfur, quinone imine dye, N-substituted oxazolidinone, N,N-substituted imidazolidine, ethylene glycol dialkyl ether, ammonium salts, pyrrole, 2-methoxy ethanol and aluminum trichloride may be added to the electrolyte solution. In some cases, a halogen containing solvent such as carbon tetrachloride and trifluoroethylene may be added to give non-combustibility, and carbon dioxide gas may be added to improve high temperature storage characteristics.

For example, the organic solid electrolyte may include polyethylene derivatives, polyethylene oxide derivatives, polypropylene oxide derivatives, phosphoric acid ester polymer, poly agitation lysine, polyester sulfide, polyvinyl alcohol, polyvinylidene fluoride, and polymers containing ionic dissociation groups.

For example, the inorganic solid electrolyte may include nitrides, halides and sulfates of Li, for example, $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$.

The injection of the electrolyte solution may be performed in any suitable step of the battery manufacturing process according to a manufacturing process and required properties of a final product. That is, the injection of the electrolyte solution may be applied before battery assembly or in the final step of battery assembly.

In an embodiment of the present disclosure, a process of applying the separator for an electrochemical device to the battery may include the commonly used winding process as well as a lamination or stacking and folding process of the separator and the electrode.

In an embodiment of the present disclosure, the separator for an electrochemical device may be interposed between the positive electrode and the negative electrode of the electrochemical device, and may be interposed between adjacent cells or electrodes when assembling a plurality of cells or electrodes to form an electrode assembly. The electrode assembly may have a variety of structures, for example, simple stack type, jelly-roll type, stack-folding type and lamination-stack type.

Hereinafter, embodiments of the present disclosure will be described in detail to help understanding of the present disclosure. However, the embodiments of the present disclosure may be modified in many other forms, and the scope of the present disclosure should not be construed as being limited to the following embodiments. The embodiments of the present disclosure are provided to describe the present disclosure completely and thoroughly to those having ordinary knowledge in the technical field to which the present disclosure pertains.

Alternatively, hereinafter, in example and comparative example, the HFP content is measured using Unity 400 spectrometer at 376.3 MHz, and spectrum indicates a value obtained by an excitation pulse width of 8.0 microseconds in 50°C deuterated dimethyl formamide and a recirculating delay of 10 seconds.

**Example 1**

For a porous polymer support, a 9 $\mu$m thick porous ethylene film is prepared.

$Al_2O_3$ (D50: 300 nm) as inorganic fillers, poly(vinylidene fluoride-co-hexafluoropropylene) (Kynar3121-50, Tm measured by DSC: 166.31°C, HFP content 10 weight%) as a first binder polymer and poly(vinylidene fluoride-co-chlorotrifluoroethylene) (Solvay, solef32008, Tm measured by DSC: 166.6°C, CTFE content 20 weight%) as a second binder polymer are added to N-methyl-2-pyrolidone (NMP) at a weight ratio of 80:16:4, and the inorganic fillers are milled and dispersed using a ball mill method to prepare an inorganics-containing porous layer forming slurry.

The inorganics-containing porous layer forming slurry is coated on at least two surfaces of the porous polymer support, and immersed in a coagulant solution comprising water and NMP at a weight ratio of 6:4 to cause immersion phase separation. Subsequently, washing with water is performed through a multi-step process, followed by drying, to prepare to a separator.

**Example 2**

A separator is manufactured by the same method as example 1 except that poly(vinylidene fluoride-co-hexafluoropropylene) (Kynar3031-10, Tm measured by DSC: 166.37°C, HFP content 18.5 weight%) is used for the first binder polymer, instead of poly(vinylidene fluoride-co-hexafluoropropylene) (Kynar3121-50).

**Example 3**

A separator is manufactured by the same method as example 1 except that poly(vinylidene fluoride-co-hexafluoropropylene) (Kynar3031-50, Tm: 165.36°C, HFP content 18.1 weight%, measured by DSC) is used for the first binder polymer, instead of poly(vinylidene fluoride-co-hexafluoropropylene) (Kynar3121-50).

**Comparative example 1**

A separator is manufactured by the same method as example 1 except that poly(vinylidene fluoride-co-hexafluoropropylene) (Solef20808, Tm: 151.53°C, HFP content 8 weight% measured by DSC) is used for the first binder polymer, instead of poly(vinylidene fluoride-co-hexafluoropropylene) (Kynar3121-50).

**Evaluation example 1: tan δ peak temperature analysis of binder polymer**

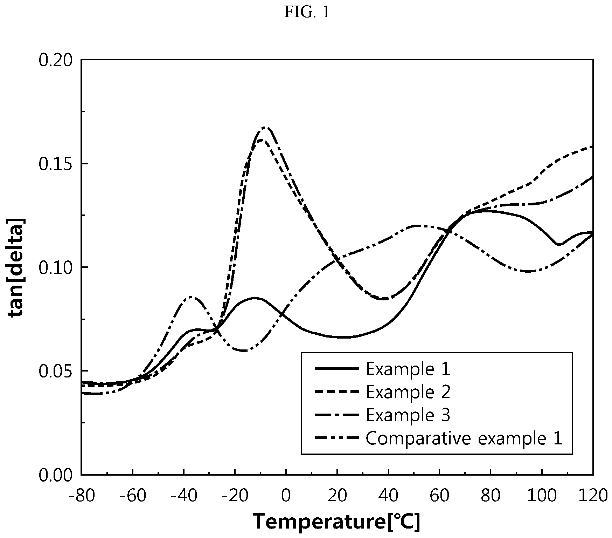

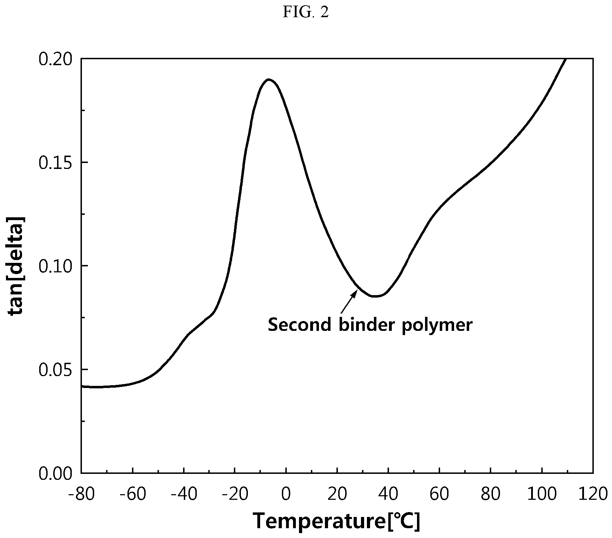

FIG. 1 shows a relationship between temperature and tan δ of the first binder polymer used in examples 1 to 3 and comparative example 1.
The pressure is applied to the first binder polymer used in examples 1 to 3 and comparative example 1 at 190°C to prepare a 0.5 mm thick binder sample, the temperature of the binder sample is maintained at -80°C for 10 min and then is increased to 140°C at the rate of 5°C/min, and a ratio between storage modulus E' and loss modulus E" is measured using TA Instruments DMA Q800 to measure a tan δ value.
Additionally, FIG. 2 shows a relationship between temperature and tan δ of the second binder polymer used in example 1.
The pressure is applied to the second binder polymer used in example 1 at 190°C to prepare a 0.5 mm thick binder sample, the temperature of the binder sample is maintained at -80°C for 10 min and then is increased to 140°C at the rate of 5°C/min, and a ratio between storage modulus E' and loss modulus E" is measured using TA Instruments DMA Q800 to measure a tan δ value.
As can be seen from FIG. 1, it can be seen that the first binder polymer used in example 1 has the second tan δ peak at -12.12°C. Additionally, it can be seen that the first binder polymer used in example 2 has the second tan δ peak at -9.68°C. It can be seen that the first binder polymer used in example 3 has the second tan δ peak at -8.74°C.
In contrast, it can be seen that the first binder polymer used in comparative example 1 has the second tan δ peak at about 20°C.
Additionally, as can be seen from FIG. 2, it is found that the second binder polymer used in example 1 has the second tan δ peak at -6.26°C.

**Evaluation example 2: Crystal form analysis of first binder polymer**

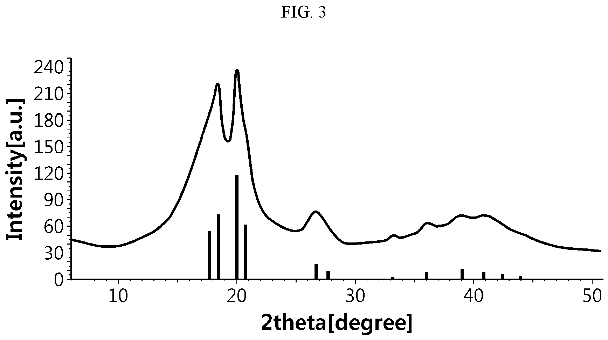

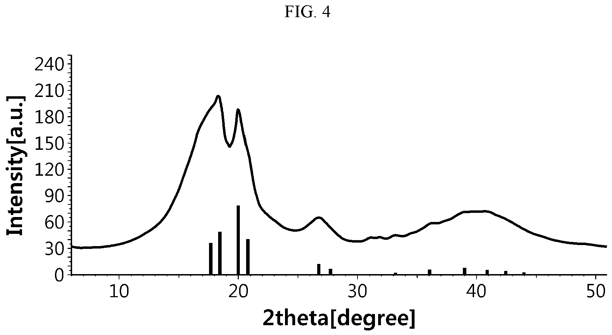

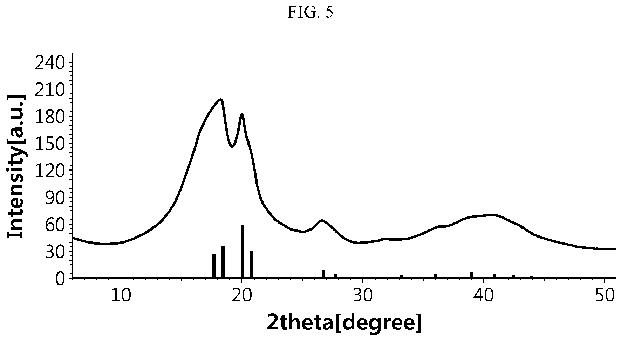

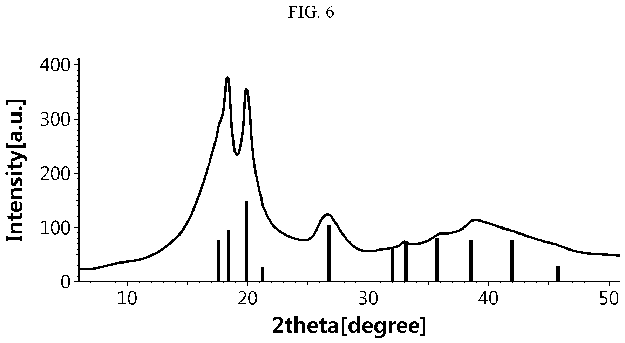

The crystal form of the first binder polymer used in examples 1 to 3 and comparative example 1 is measured using Wide angle X-ray diffraction (WAXS) and the results are shown in FIGS. 3 to 6 respectively.
In FIGS. 3 to 5, when measured by Wide angle X-ray diffraction (WAXS), the first binder polymer used in examples 1 to 3 shows the relative ratio of diffraction peak intensity of 46, 62, 100, 52, 15, 8 at 2θ position of 17.7°, 18.44°, 20.04°, 20.73°, 26.72°, 27.70° respectively. Additionally, it can be seen that the relatively wide diffraction peak is observed near 2θ position of 20.73°, and shoulder peak is found near 20.73°.
Accordingly, it can be seen that the first binder polymer used in examples 1 to 3 has γ-crystal form.
In contrast, in FIG. 6, when measured by Wide angle X-ray diffraction, the relative ratio of diffraction peak intensity at 2θ position of 17.65°, 18.43°, 19.93°, 21.29°, 26.75°, 32.05° is 52, 64, 100, 17, 70, 41 respectively. Additionally, it can be seen that relatively narrow diffraction peak is observed near 2θ position of 20.73°, and shoulder peak is not found near 20.73°.
Accordingly, it can be seen that the first binder polymer used in comparative example 1 does not have γ-crystal form.

**Claims**

**1.** A separator for an electrochemical device, comprising:

a porous polymer support; and
an inorganics-containing porous layer on at least one surface of the porous polymer support, and comprising inorganic fillers and a binder polymer,

wherein the binder polymer comprises a first binder polymer, and
wherein the first binder polymer is poly(vinylidene fluoride-co-hexafluoropropylene) having a tan $\delta$ peak at -18°C to -5°C when measured by Dynamic Mechanical Analysis.

2. The separator for an electrochemical device according to claim 1, wherein an amount of hexafluoropropylene repeating units in the first binder polymer is 4 weight% to 22 weight% based on 100 weight% of a sum of an amount of vinylidene fluoride repeating units and the amount of hexafluoropropylene repeating units.

3. The separator for an electrochemical device according to claim 1, wherein the binder polymer further comprises a second binder polymer, and
wherein the second binder polymer is poly(vinylidene fluoride-co-chlorotrifluoroethylene) having a tan $\delta$ peak at -11°C to 0°C when measured by the Dynamic Mechanical Analysis.

4. The separator for an electrochemical device according to claim 3, wherein the second binder polymer has a melting temperature of 155°C or more.

5. The separator for an electrochemical device according to claim 3, wherein an amount of chlorotrifluoroethylene repeating units in the second binder polymer is 10 weight% to 30 weight% based on 100 weight% of a sum of an amount of vinylidene fluoride repeating units and the amount of chlorotrifluoroethylene repeating units.

6. The separator for an electrochemical device according to claim 3, wherein a weight ratio between the first binder polymer and the second binder polymer is 50:50 to 95:5.

7. The separator for an electrochemical device according to claim 1, wherein a thickness of the inorganics-containing porous layer is 10 $\mu$m or less.

8. The separator for an electrochemical device according to claim 1, wherein thermal shrinkage in each of Machine Direction (MD) and Transverse Direction (TD) after leaving the separator for an electrochemical device untouched at 130°C for 1 hour is 25% or less.

9. The separator for an electrochemical device according to claim 1, wherein thermal shrinkage in each of Machine Direction (MD) and Transverse Direction (TD) after leaving the separator for an electrochemical device untouched at 150°C for 30 minutes is 55% or less.

10. The separator for an electrochemical device according to claim 1, wherein the separator for an electrochemical device has an electrode adhesion property of 40 gf/25 mm or more.

11. The separator for an electrochemical device according to claim 1, wherein the first binder polymer is poly(vinylidene fluoride-co-hexafluoropropylene) having a $\gamma$-crystal form.

12. The separator for an electrochemical device according to claim 1, wherein the first binder polymer has a melting temperature of 155°C or more.

13. An electrochemical device, comprising:

a positive electrode and a negative electrode, and a separator for an electrochemical device interposed between the positive electrode and the negative electrode,
wherein the separator for an electrochemical device is defined in any one of claims 1 to 12.

FIG. 1

FIG. 2

FIG. 3

FIG. 4

FIG. 5

FIG. 6

## INTERNATIONAL SEARCH REPORT

| International application No. |
| --- |
| **PCT/KR2022/010656** |

**A. CLASSIFICATION OF SUBJECT MATTER**

**H01M 50/451**(2021.01)i; **H01M 50/489**(2021.01)i; **H01G 11/52**(2013.01)i; **H01M 50/46**(2021.01)i

According to International Patent Classification (IPC) or to both national classification and IPC

**B. FIELDS SEARCHED**

Minimum documentation searched (classification system followed by classification symbols)

H01M 50/451(2021.01); B29C 67/20(2006.01); B32B 5/18(2006.01); C08F 297/04(2006.01); C08J 9/00(2006.01); C09J 7/00(2006.01); C09J 7/02(2006.01); H01M 2/16(2006.01); H01M 50/409(2021.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 바인더 고분자(binder polymer), tan δ 피크(tan δ peak), 전기화학소자(electrochemical device)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0052336 A (LG CHEM, LTD.) 10 May 2021 (2021-05-10)<br>See paragraphs [0012]-[0025], [0036], [0071]-[0072], [0192] and [0210]. | 1-13 |
| A | KR 10-2010-0036282 A (KURARAY CO., LTD. et al.) 07 April 2010 (2010-04-07)<br>See paragraphs [0028]-[0110]. | 1-13 |
| A | JP 2021-028396 A (TORAY IND. INC.) 25 February 2021 (2021-02-25)<br>See paragraphs [0007]-[0078]. | 1-13 |
| A | KR 10-2006-0134159 A (MITSUI CHEMICALS, INC.) 27 December 2006 (2006-12-27)<br>See claims 1-12. | 1-13 |
| A | KR 10-2014-0144192 A (TORAY INDUSTRIES, INC.) 18 December 2014 (2014-12-18)<br>See paragraphs [0008]-[0084]. | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 November 2022** | **16 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/010656**

| Patent document cited in search report | | | Publication date (day/month/year) | Patent family member(s) | | | Publication date (day/month/year) |
|---|---|---|---|---|---|---|---|
| KR | 10-2021-0052336 | A | 10 May 2021 | CN | 114175386 | A | 11 March 2022 |
| | | | | EP | 4024598 | A1 | 06 July 2022 |
| | | | | US | 2022-0223977 | A1 | 14 July 2022 |
| | | | | WO | 2021-086088 | A1 | 06 May 2021 |
| KR | 10-2010-0036282 | A | 07 April 2010 | CN | 101682048 | A | 24 March 2010 |
| | | | | EP | 2157646 | A1 | 24 February 2010 |
| | | | | JP | 5276442 | B2 | 28 August 2013 |
| | | | | JP | WO2008-149815 | A1 | 26 August 2010 |
| | | | | US | 2010-0159353 | A1 | 24 June 2010 |
| | | | | WO | 2008-149815 | A1 | 11 December 2008 |
| JP | 2021-028396 | A | 25 February 2021 | CN | 111902471 | A | 06 November 2020 |
| | | | | CN | 111902471 | B | 04 January 2022 |
| | | | | EP | 3878898 | A1 | 15 September 2021 |
| | | | | JP | 2020-079391 | A | 28 May 2020 |
| | | | | JP | 6795107 | B2 | 02 December 2020 |
| | | | | JP | 6973605 | B2 | 01 December 2021 |
| | | | | KR | 10-2021-0087460 | A | 12 July 2021 |
| | | | | WO | 2020-096061 | A1 | 14 May 2020 |
| KR | 10-2006-0134159 | A | 27 December 2006 | CN | 1961053 | A | 09 May 2007 |
| | | | | EP | 1734094 | A1 | 20 December 2006 |
| | | | | JP | WO2005-090505 | A1 | 31 January 2008 |
| | | | | KR | 10-0837013 | B1 | 10 June 2008 |
| | | | | TW | 200604310 | A | 01 February 2006 |
| | | | | TW | I305797 | B | 01 February 2009 |
| | | | | US | 2007-0172649 | A1 | 26 July 2007 |
| | | | | WO | 2005-090505 | A1 | 29 September 2005 |
| KR | 10-2014-0144192 | A | 18 December 2014 | CN | 104205417 | A | 10 December 2014 |
| | | | | CN | 104205417 | B | 31 August 2016 |
| | | | | JP | 6233301 | B2 | 22 November 2017 |
| | | | | JP | WO2013-146811 | A1 | 14 December 2015 |
| | | | | WO | 2013-146811 | A1 | 03 October 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20210095122
- KR 20210095123
- KR 20210095124